# EUROPEAN PATENT APPLICATION

(11) **EP 2 108 244 A1**
(43) Date of publication of application: **14.10.2009**
(21) Application number: 09157454.1
(22) Date of filing: 07.04.2009
(51) Int. Cl.: A01D 78/02, A01D 75/30, A01D 78/10

(54) **A tedder**

(30) Priority: 11.04.2008 DK 200800532
(71) Applicant: JF-Fabriken - J. Freudendahl A/S, 6400 Sonderborg (DK)
(72) Inventor: Springer, Klaus, 28268 Lengede (DE)
(74) Representative: Nielsen, Kim Garsdal

(57) **Abstract**

The hay tedder comprises a longitudinal running frame (1) with a front end designed to be connected to a tractor (7), a rear end carrying a rear work implement (45) comprising a row of rotors (47), and two side wings (23, 27) each comprising a side work implement (27) comprising a row of rotors (29), the side wings (23, 27) being adapted for swinging between a working position and a transport position, the side wings (23, 27) extending to a respective side of the longitudinal running frame (1) in the working position and extending rearwards over the rear work implement (45) in the transport position.

## Description

The present invention relates to a hay tedder comprising a longitudinal running frame with a front end designed to be connected to a tractor, a rear end carrying a rear work implement comprising a row of rotors, and two side wings each comprising a side work implement comprising a row of rotors, the side wings being adapted for swinging between a working position and a transport position, the side wings extending to a respective side of the longitudinal running frame in the working position and extending rearwards in the transport position.

A hay tedder of this type is known from EP-A-0 900 515, which actually describes a universal running frame on which various work implements, such as hay tedders, can be mounted in a number of three-point suspensions. In the transport position, the individual work implements are folded together so that the side work implements are located in front of the rear work implements. The need for folding sets a limit to the size of the side work implements, that is, the number of rotors comprised in the row of the individual side work implement. Accordingly, the need for folding sets a limit to the work width with which the hay tedder can be built.

A hay tedder or simply a tedder is generally a known implement used in agriculture for airing a crop lying in windrows on the field to promote the drying of the crop. It should be noted that the crop may be any crop which should be dried before collection, like grass/hay. Such hay tedders comprise a row of rotors with rake teeth which, in use, catch the crop on the field and throw the crop into the air so that it scatters down onto the field.

EP-A-1 616 474 describes a mower comprising a running frame with a front end designed to be connected with a tractor and a rear end provided with ground wheels. Two side wings comprising mowing aggregates supported by carrier arms are swingable between working positions in which they extend laterally, and transport positions in which they extend rearwards and over the ground wheels. There is no work implement at the rear end as a work implement or mower aggregate placed at the rear end of the running frame would mow crop that had been flattened by the tractor. Therefore, a mowing aggregate mounted on the front of the tractor is used instead.

The object of the present invention is to provide a hay tedder which can be built with a very large working width.

This is obtained by designing a hay tedder so that the side work implements extend over the rear work implement in the transport position. In this way, the side wings can be built with a very long row of rotors, such as eight rotors in a row. Because the side work implements extend over the rear work implements in the transport position, the rows of rotors of the side work implements need not be folded together in the transport position, but can extend far rearwards.

In a preferred embodiment, each side wing is connected through a hinge to an intermediate frame of the running frame, the intermediate frame being movable relative to a main frame part. In this way, the position of the side wings can be adjusted jointly relative to the main frame part.

The intermediate frame is preferably hinged to the main frame part for turning about a horizontal axis transverse to the longitudinal direction of the running frame. This makes it possible to tilt the rotors by turning the intermediate frame about the said horizontal axis in the working position and possibly to lift or lower the rows of rotors of the side wings in the transport position.

Preferably, an actuator is provided for turning the intermediate frame relative to the main frame part about the said axis. Thereby, turning of the intermediate frame is facilitated.

Each side wing is preferably connected with the running frame through an intermediate member so that the side wing is turnable about two axes relative to the running frame. This makes it possible to individually change the positions of the side wings.

In a preferred embodiment, each side wing comprises a beam which, at one end, carries the row of rotors and, at its other end, is hinged to the intermediate member.

The beams preferably have a variable length, whereby it becomes possible to extend the side work implements further out laterally in the working position to increase the working width, and to pull the side work implements forwards in the transport position to shorten the total transport length of tractor and hay tedder.

The beams preferably carry their respective side work implements by means of a hinge with a hinge axis transverse to the row of rotors at the middle of the row. This makes the work implements able to tilt about the said hinge axis to adapt to the contours of the field.

In one embodiment, the rotors of the side work implement are individually connected with their neighbouring rotors with a limited mutual turnability of less than 30° about axes with a horizontal component transverse to the row of rotors. This movability makes it possible for the row of rotors to adapt to the contours of the field, while the limitation of the movability provides structural advantages and is permissible because folding of the row of rotors is not necessary and need not be a possibility.

The rear work implement is preferably foldable. In this way, the rear work implement may in itself be allowed to have a larger working width than the transport width permitted when driving on public roads.

In one embodiment, the rotors of the rear work implement are side by side in the folded state. In this way, the folded rear work implement has a relatively small height, and therefore the side work implements need not be lifted very high in the transport position, whereby the total transport height of the hay tedder becomes relatively small.

Preferably, the running frame has ground wheels which are preferably steerable. The ground wheels relieve the three-point suspension of the tractor, which is usually applied for connecting hay tedders, and the steerability of the ground wheels improves the manoeuvrability of the combined vehicle: tractor and hay tedder.

The invention will be described in further detail below by means of an example of an embodiment with reference to the schematic drawing, in which:
Fig. 1 is a top view of a hay tedder in the working position;

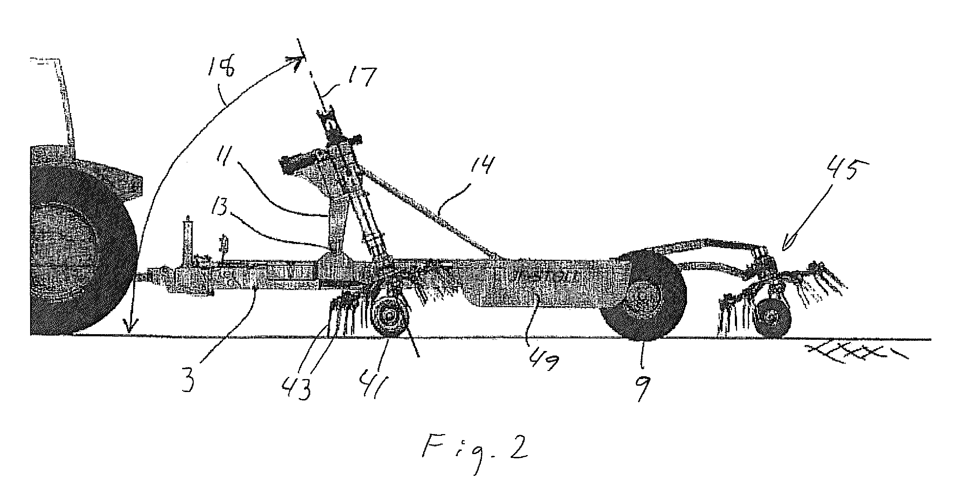

Fig. 2 is a side view of the hay tedder of Fig. 1;
Fig. 3 is a rear view of part of the hay tedder of Fig. 1; and
Fig. 4 is a side view of the hay tedder in the transport position.

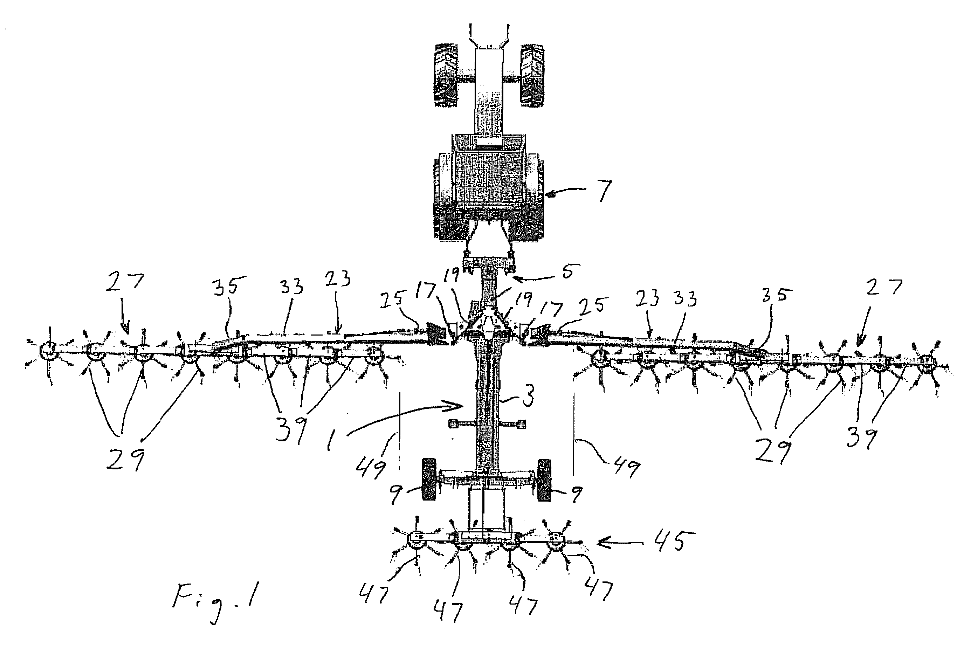

The hay tedder comprises a longitudinal running frame 1 with a main frame part 3 designed at its front end 5 to be connected to a tractor 7. As appears from Fig. 1, the hay tedder is built substantially symmetrically about the longitudinal axis of the running frame 1. At the rear end, the main frame part 3 is provided with ground wheels 9, which are preferably steerable in a manner known *per se* so that they turn proportionately to an angle between the respective longitudinal directions of the tractor and the running frame. In this way, the hay tedder will follow substantially the same path as the tractor when driving through a curve.

An intermediate frame 11 is hinged on the main frame part 3 about a horizontal axis 13 at right angles to the longitudinal direction of the main frame part 3. The position of the intermediate frame 11 is adjustable by means of a control rod 14, the length of which is adjustable and which may comprise a hydraulic cylinder. Intermediate members 15 are hinged to the intermediate frame 11 on each side thereof and can therefore swing about hinge axes 17 extending in parallel vertical planes. The hinge axes 17 have an inclination 18 which depends on the position of the intermediate frame 11. The intermediate members 15 can be swung about the hinge axes 17 by means of actuators in the form of hydraulic cylinders 19.

A beam 23 is hinged to each intermediate member 15 about a hinge axis 21. The hinge axis 21 is at right angles to the hinge axis 17 of the hinge between the intermediate member 15 and the intermediate frame 11. The beams 23 can be swung upwards about the hinge axes 21 by means of actuators in the form of hydraulic cylinders 25.

At its outer end, each beam 23 carries a side work implement 27 comprising a row of rotors 29. The side work implement is hinged to the beam 23 and can thereby turn about a hinge axis 31 which is parallel to the hinge axis 21, for example, for adjusting to the surface of a field being worked.

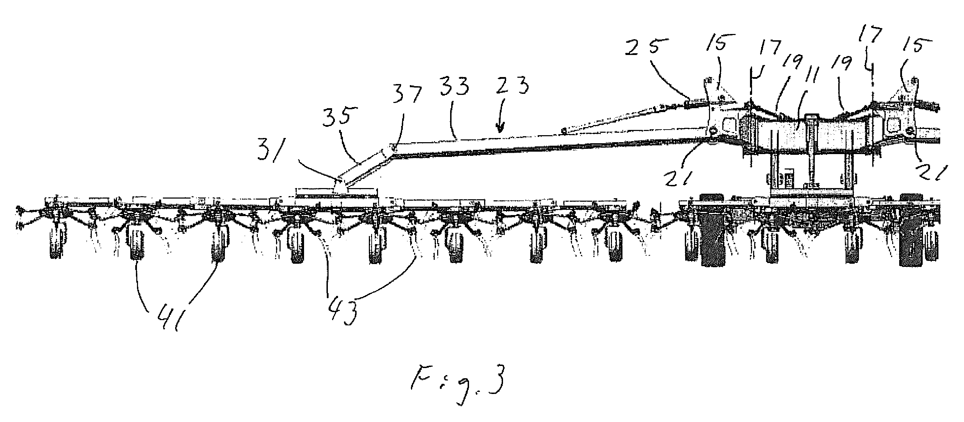

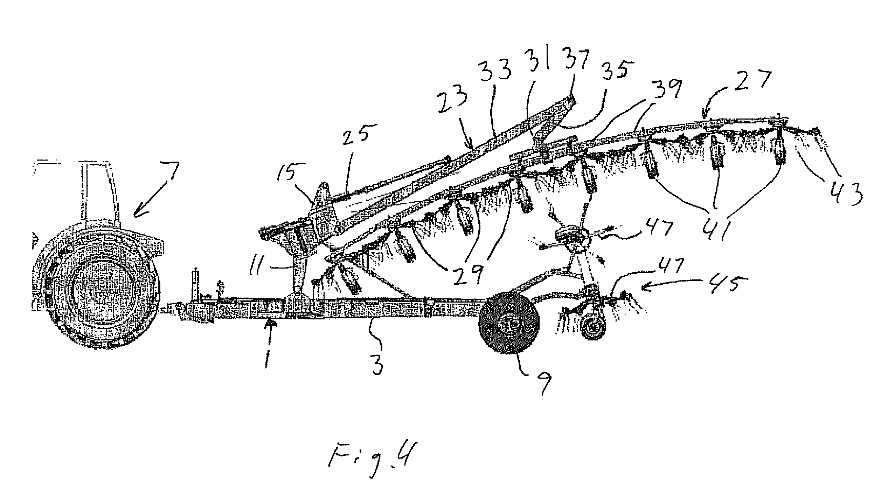

Each beam 23 is divided into an inner and an outer part 33, 35, mutually connected by a hinge with a hinge axis 37 parallel with the hinge axes 21 and 31. Upon turning of the outer part 35 relative to the inner part 33, the effective length of the beam 23 may be changed as clearly appears from a comparison of the beam 23 shown in Figs. 3 and 4, showing the beam 23 with a large and a small effective length, respectively, that is, the distance between the hinge axes 21 and 37.

The rotors 29 in the side work implements 27 are carried by frame elements 39 interconnected so that they are mutually movable about rotational axes parallel with the hinge axes 21, 31 and 37 in the embodiment shown. Alternatively, the rotational axes might be more horizontal. The mutual movability between the frame elements 39 is limited, however, and is substantially less than 30°. The mutual movability permits the row of rotors 29 to adapt to the contours of the field.

Additionally, the frame elements 39 carry wheels 41 supporting the rotors 29 against the field. The rotors 29 have rake teeth 43 and are generally of a structure known *per se.*

In addition to the side work implements 27, the hay tedder also comprises a rear work implement 45 suspended in a three-point suspension on the main frame part 3. The rear work implement 45 comprises a row of four rotors 47 which are foldable and interconnected in a manner known *per se.* In the embodiment shown, the outermost of the four rotors 47 are adapted to be swung up into a transport position as shown in Fig. 4. Alternatively, the outermost of the four rotors 47 might be adapted to be turned rearwards about substantially vertical axes so as to be placed behind and on a level with the innermost or middle ones of the four rotors 47 in the transport position.

The hay tedder also comprises guards 49 for preventing, at least to some degree, crop from being thrown in front of the ground wheels 9 during operation.

The hay tedder functions as follows:

During operation or work, the side wings comprising the side work implements 27, beams 23 and intermediate members 15 are swung out to the sides, and the beams 23 are extended as shown in Figs. 1 and 3. The rotors 47 of the rear work implement 45 are mutually aligned. Thereby, the hay tedder has a very large working width as the side work implements each work a very wide path, leaving between them a narrower path subsequently worked by the rear work implement 45. Due to the steerability of the ground wheels 9, the rear work implement 45 follows the narrow path left by the side work implements 27 with good accuracy.

The inclination of the intermediate frame 11 and thereby the inclination of the hinge axes 17 relative to vertical and of the hinge axes 21, 31, 37 and the rotors 29 relative to horizontal is adjusted by means of the control rod 14.

For transport setting, the side work implements 27 are lifted by means of the hydraulic cylinders 25, and the side wings are swung rearwards by means of the hydraulic cylinders 19. The beams 23 are contracted to a short effective length by turning the outer part 35 inwards underneath the inner part 33 by means of actuators, not shown.

In this position, the side work implements 27 extend over the rear work implement 45 as shown in Fig. 4. It has therefore not been necessary to fold together the side work implements 27, as is usual according to prior art, to avoid the ground wheels being placed far behind the tractor 7, which is detrimental to the driving properties and the manoeuvrability of the combined vehicle.

In one embodiment, the side work implements can be lowered to rest on a support, not shown, in the transport position. Such lowering may be performed either by means of the hydraulic cylinders 25 of the beams 23 or, if the control rod 14 comprises a hydraulic cylinder or the like, by means of such hydraulic cylinder.

The outermost rotors 47 of the rear work implement 45 are swung up into the transport position shown in Fig. 4. As appears from Fig. 4, this means that the side work implements 27 must be carried fairly high up in the transport position. By using the above alternative embodiment of the rear work implement, not shown, in which the outermost of the four rotors 47 are placed behind the middle rotors 47 in the transport position, the side work implements may be carried substantially lower down in the transport position, as is easily understood by considering Fig. 4.

## Claims

1. A hay tedder comprising a longitudinal running frame (1) with a front end (5) designed to be connected to a tractor (7), a rear end carrying a rear work implement (45) comprising a row of rotors (47), and two side wings (23, 27) each comprising a side work implement (27) comprising a row of rotors (29), the side wings (23, 27) being adapted for swinging between a working position and a transport position, the side wings (23, 27) extending to a respective side of the longitudinal running frame (1) in the working position and extending rearwards in the transport position, **characterized in that** the side work implements (27) extend over the rear work implement (45) in the transport position.

2. A hay tedder according to claim 1, **characterized in that** each side wing (23, 27) is connected through a hinge to an intermediate frame (11) of the running frame (1), the intermediate frame (11) being movable relative to a main frame part (3).

3. A hay tedder according to claim 2, **characterized in that** the intermediate frame (11) is hinged to the main frame part (3) for turning about a horizontal axis (13) transverse to the longitudinal direction of the running frame.

4. A hay tedder according to claim 3, **characterized in** comprising an actuator (14) for turning the intermediate frame (11) relative to the main frame part (3) about the said axis (13).

5. A hay tedder according to any one of claims 1 to 4, **characterized in that** each side wing (23, 27) is connected with the running frame (1) through an intermediate member (15) so that the side wing (23, 27) is turnable about two axes relative to the running frame.

6. A hay tedder according to claim 5, **characterized in that** each side wing (23, 27) comprises a beam (23) which, at one end, carries the row of rotors (29) and, at its other end, is hinged to the intermediate member (15).

7. A hay tedder according to claim 6, **characterized in that** the beams (23) have a variable length.

8. A hay tedder according to any one of claims 1 to 7, **characterized in that** the beams (23) carry their respective side work implements (27) by means of a hinge with a hinge axis (31) transverse to the row of rotors (29) at the middle of the row.

9. A hay tedder according to any one of claims 1 to 8, **characterized in that** the rotors (29) of the side work implements (27) are individually connected with their neighbouring rotors (29) with a limited mutual turnability of less than 30° about axes with a horizontal component transverse to the row of rotors for adaptation to the contours of a field.

10. A hay tedder according to any one of claims 1 to 9, **characterized in that** the rear work implement (45) is foldable.

11. A hay tedder according to claim 10, **characterized in that** the rotors (47) of the rear work implement are side by side in the folded state.

12. A hay tedder according to any one of claims 1 to 11, **characterized in that** the running frame (1) has ground wheels (9) which are preferably steerable.
